# EUROPEAN PATENT SPECIFICATION

(11) **EP 3 254 845 B1**
(45) Date of publication and mention of the grant of the patent: **04.09.2019**
(21) Application number: 16746283.7
(22) Date of filing: 26.01.2016
(51) Int. Cl.: B32B 15/14, B32B 27/00, B32B 5/02, B32B 7/12, B32B 15/095, C09D 175/04

(54) **COMPOSITE OF COATED, SHAPED METAL MATERIAL AND CLOTH CONTAINING CHEMICAL FIBERS, AND METHOD FOR MANUFACTURING SAME**
VERBUNDSTOFF AUS BESCHICHTETEM, GEFORMTEM METALLMATERIAL UND TUCH MIT CHEMISCHEN FASERN UND VERFAHREN ZUR HERSTELLUNG DAVON
COMPOSITE DE MATÉRIAU MÉTALLIQUE MIS EN FORME REVÊTU ET TISSU CONTENANT DES FIBRES CHIMIQUES, ET PROCÉDÉ DE FABRICATION ASSOCIÉ

(30) Priority: 04.02.2015 JP 2015020261
(43) Date of publication of application: 13.12.2017
(73) Proprietor: NIPPON STEEL NISSHIN CO., LTD., Chiyoda-ku Tokyo 100-8366 (JP)
(72) Inventor: MORIKAWA, Shigeyasu, Tokyo 100-8366 (JP); FUJII, Takahiro, Tokyo 100-8366 (JP)
(74) Representative: Epping - Hermann - Fischer
(86) International application number: PCT/JP2016/000361
(87) International publication number: WO 2016/125449

(56) References cited:
- WO-A1-2007/122000
- JP-A- H11 320 760
- JP-A- 2011 509 316
- JP-A- 2014 141 021
- JP-A- 2014 159 126

## Description

### Technical Field

The present invention relates to a composite in which a coated shaped metal material and cloth containing a chemical fiber are joined to each other, and also to a method for manufacturing the composite.

### Background Art

Metal sheets, press-molded products thereof, or so-called "shaped metal materials" molded by casting, forging, cutting, powder metallurgy, or the like are used in various industrial products such as automobiles. Shaped metal materials subjected to a surface treatment such as coating, blasting or polishing are sometimes used for providing good design. For example, used are a composite formed by lining cloth such as felt, a woven fabric or a nonwoven fabric, which contains a chemical fiber, on the surface of a shaped metal material. Typically employed methods for lining cloth on the surface of a shaped metal material use a double sided tape or an adhesive to bond the cloth to the surface (see, e.g., PTL 1).

A composite described in PTL 1 has a melamine resin decorative layer including a chemical fiber base material (e.g., cloth), an adhesive layer and a metal layer laminated in this order. The melamine resin decorative layer and the metal layer are bonded together with the adhesive layer composed of an adhesive.

PTL 2 discloses a composite comprising a coated shaped metal material which includes a shaped metal material and a coating formed on a surface of the shaped metal material; and a molding of a thermoplastic resin which is joined to a surface of the coated shaped metal material by injection molding etc.

### Citation List

### Patent Literature

PTL 1
   Japanese Patent Application Laid-Open No. 2014-208453
PTL 2
   Japanese Patent Application Laid-Open No. 2014-159126

### Summary of Invention

### Technical Problem

Bonding of cloth to the surface of a shaped metal material using a double sided tape or an adhesive as described in PTL 1 has a disadvantage in that the thickness and weight of the composite increase by those of the double sided tape or adhesive. Further, since a step of attaching the double sided tape or applying the adhesive is necessary, and an aging time is required in some cases until the adhesive strength stabilizes, the manufacturing time is prolonged and the manufacturing cost is increased. Using double sided tapes and adhesives raises another disadvantage of increasing the cost for materials.

The first object of the present invention is to provide a composite in which a shaped metal material and cloth containing a chemical fiber are joined to each other with excellent adhesion, without using a double sided tape or an adhesive. The second object of the present invention is to provide a method for manufacturing the composite. Thus, the problem of the invention is to provide an alternative thermoplastic resin composition for joining to a coated shaped metal material

### Solution to Problem

This problem is solved by the features of the independent claims.

The present inventors have found that the above disadvantages can be overcome by forming a predetermined coating on the surface of a shaped metal material, and completed the present invention with further extensive studies.

The present invention relates to the following composite.
[1] A composite incluing: a coated shaped metal material which includes a shaped metal material and a coating formed on a surface of the shaped metal material; and cloth which contains a chemical fiber and is joined to the coated side of the coated shaped metal material, in which the coating contains a polyurethane resin containing a polycarbonate unit, a mass ratio of the polycarbonate unit to mass of a total resin in the coating is 15 to 80 mass%, and a film thickness of the coating is 0.2 µm or more, the chemical fiber is a polyurethane fiber, a polyvinyl alcohol fiber, a polyvinyl chloride fiber or a combination thereof. The composite according to [1] in which the cloth is a woven fabric, a knitted fabric, lace, felt, a nonwoven fabric or a combination thereof.

Further, the present invention relates to the following method for manufacturing a composite. A method for manufacturing a composite including a coated shaped metal material and cloth containing a chemical fiber, the coated shaped metal material including a shaped metal material and a coating formed on the coated side of the shaped metal material, the method including: providing the coated shaped metal material; heating the coated shaped metal material; and joining the cloth containing a chemical fiber by compression to the coated side of the coated shaped metal material that is heated, in which the coating contains a polyurethane resin containing a polycarbonate unit, a mass ratio of the polycarbonate unit to mass of a total resin in the coating is 15 to 80 mass%, and a film thickness of the coating is 0.2 µm or more, and the chemical fiber is a polyurethane fiber, a polyvinyl alcohol fiber, a polyvinyl chloride fiber, or a combination thereof.

### Advantageous Effects of Invention

The present invention can provide a composite in which a coated shaped metal material and cloth containing a chemical fiber are joined with excellent adhesion to each other, without using a double sided tape or an adhesive. The composite according to the present invention can be manufactured easily at low cost.

### Description of Embodiments

### 1. Composite

Hereinafter, an embodiment of the present invention will be described. The composite according to the present embodiment includes a coated shaped metal material, and cloth which contains a chemical fiber and is joined to the surface of the coated shaped metal material. Hereinafter, each component will be described.

### [Coated Shaped Metal Material]

A coated shaped metal material includes a shaped metal material, and a coating formed on the surface of the shaped metal material. The coated shaped metal material may also include a chemical conversion film formed between the shaped metal material and the coating. Hereinafter, each component of the coated shaped metal material will be described.

### (1) Shaped Metal Material

Types of shaped metal materials serving as base materials to be coated are not particularly limited. Examples of the shaped metal materials include: metal sheets such as cold-rolled steel sheets, zinc-coated steel sheets, Zn-Al alloy-coated steel sheets, Zn-Al-Mg alloy-coated steel sheets, Zn-Al-Mg-Si alloy-coated steel sheets, aluminum-coated steel sheets, stainless steel sheets (including austenitic, martensitic, ferritic, and ferrite-martensite duplex-phase stainless steel sheets), aluminum sheets, aluminum alloy sheets, and copper sheets; pressed products of metal sheets; and various metallic members shaped by processing methods such as casting (e.g., aluminum die-casting and zinc die-casting), forging, cutting, and powder metallurgy. The shaped metal material may be subjected to a conventional coating pretreatment such as degreasing or pickling, as necessary.

### (2) Chemical Conversion Film

As described above, the coated shaped metal material may also include a chemical conversion film formed between the shaped metal material and a coating. The chemical conversion film is formed on the surface of the shaped metal material, and can improve the adhesion of the coating to the shaped metal material and the corrosion resistance of the shaped metal material. The chemical conversion film may be formed, within the shaped metal material surface, at least on a region (joint surface) to be joined to below-described cloth, but is usually formed on the entire surface of the shaped metal material.

Types of chemical conversion treatment for forming the chemical conversion film are not particularly limited. Examples of the chemical conversion treatment include chromate conversion treatment, chromium-free conversion treatment, and phosphating treatment. The coverage of the chemical conversion film formed by the chemical conversion treatment is not particularly limited as long as the coverage falls within a range effective for improving the adhesion of the coating and the corrosion resistance. For example, the coverage of the chromate film can be adjusted so that the coverage in terms of the total amount of Cr becomes 5 to 100 mg/m². The coverage of the chromium-free film can be adjusted so that the coverage of a Ti-Mo composite film falls within a range of 10 to 500 mg/m² or the coverage of a fluoro acid film falls within a range of 3 to 100 mg/m² in terms of the amount of fluorine or in terms of the total amount of metal elements. The coverage of the phosphate film can be adjusted to 0.1 to 5 g/m².

### (3) Coating

The coating contains a polyurethane resin containing a polycarbonate unit, and improves the adhesion of cloth to the shaped metal material. As described below, the coating may further contain a polycarbonate unit-free resin as an optional component. The coating, as with the chemical conversion film, may only be formed on the joint surface within the shaped metal material surface, but is usually formed on the entire surface of the shaped metal material (or the chemical conversion film).

The polyurethane resin containing a polycarbonate unit has a polycarbonate unit in the molecular chain thereof. The "polycarbonate unit" refers to a structure shown below in the molecular chain of the polyurethane resin. The polyurethane resin containing a polycarbonate unit has a skeleton (such as a benzene ring) and functional group similar to those of a chemical fiber contained in below-described cloth. This allows the polyurethane resin containing a polycarbonate unit to become compatible with the chemical fiber contained in cloth to strongly bond thereto when the cloth is bonded by thermocompression to the coated shaped metal material. Therefore, the adhesion of cloth to the coating can be improved by adding the polyurethane resin containing a polycarbonate unit to the coating.

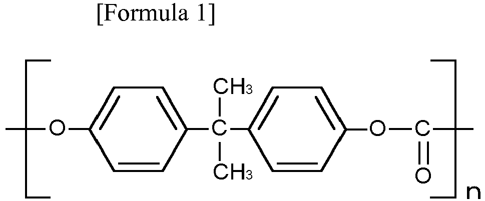

The polyurethane resin containing a polycarbonate unit can be prepared, for example, by steps described below. An organic polyisocyanate is reacted with a polycarbonate polyol and a polyol having a tertiary amino group or a carboxyl group to form a urethane prepolymer. Polyols other than the polycarbonate polyol compound, for example, polyester polyol and polyether polyol, may be used in combination to an extent that does not compromise the objects of the present invention.

A cationic polyurethane resin containing a polycarbonate unit can be formed by neutralizing the tertiary amino group of the produced urethane prepolymer with an acid, or quaternizing the same with a quaternizing agent, followed by chain elongation using water.

Alternatively, an anionic polyurethane resin containing a polycarbonate unit can be formed by neutralizing the carboxyl group of the produced urethane prepolymer with a basic compound such as triethylamine, trimethylamine, diethanolmonomethylamine, diethylethanolamine, caustic soda, or caustic potassium to converse the prepolymer to a carboxylate.

The polycarbonate polyol can be obtained by reacting a carbonate compound with a diol compound. Examples of the carbonate compounds include dimethyl carbonate, diethyl carbonate, ethylene carbonate, and propylene carbonate. Examples of the diol compounds include ethylene glycol, diethylene glycol, propylene glycol, dipropylene glycol, neopentyl glycol, methylpentanediol, dimethylbutanediol, butyl ethyl propanediol, diethylene glycol, triethylene glycol, tetraethylene glycol, 1,4-butanediol, 1,4-cyclohexanediol, and 1,6-hexanediol. The polycarbonate polyol may be obtained by chain elongation using an isocyanate compound.

Types of organic polyisocyanates are not particularly limited. Examples of the organic polyisocyanates include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, isophorone diisocyanate, and 4,4'-dicyclohexylmethane diisocyanate. These organic polyisocyanates may be used individually or in combination.

The coating may further contain a polycarbonate unit-free resin as an optional component. The polycarbonate unit-free resin further improves the adhesion of the coating to the shaped metal material. Types of polycarbonate unit-free resins are not particularly limited as long as the resin contains no polycarbonate unit in the molecular chain thereof. A polycarbonate unit-free resin containing a polar group is preferred for improving the adhesion of the coating to the shaped metal material. Examples of the polycarbonate unit-free resins include epoxy resins, polyolefin resins, phenol resins, acrylic resins, polyester resins, and polycarbonate unit-free polyurethane resins. These resins may be used individually or in combination.

Examples of the epoxy resins include bisphenol A epoxy resins, bisphenol F epoxy resins, and bisphenol AD epoxy resins. Examples of the polyolefin resins include polyethylene resins and polypropylene resins. Examples of the phenol resins include novolac resins and resol resins.

The polycarbonate unit-free polyurethane resin can be obtained from copolymerization of a diol and a diisocyanate. Examples of the diols include bisphenol A, 1,6-hexanediol and 1,5-pentanediol, which are not a polycarbonate diol. Examples of the diisocyanates include aromatic diisocyanates, aliphatic diisocyanates, and alicyclic diisocyanates.

The mass ratio of the polycarbonate unit to the mass of the total resin is 15 to 80 mass%. When the mass ratio of the polycarbonate unit is less than 15 mass%, the adhesion of the cloth to the coating may become unsatisfactory. On the other hand, when the mass ratio of the polycarbonate unit is more than 80 mass%, the adhesion of the coating to the shaped metal material may become unsatisfactory. The mass ratio of the polycarbonate unit to the mass of the total resin can be determined by nuclear magnetic resonance spectroscopy (NMR analysis) using a sample of the coating dissolved in chloroform.

Preferably, the coating further contains an oxide, a hydroxide or a fluoride of a metal (valve metal) selected from the group consisting of Ti, Zr, V, Mo, and W, or a combination thereof. Dispersing any of these metal compounds in a chemical conversion film can further improve the corrosion resistance of the shaped metal material. Particularly, the fluorides of these metals can also be expected to suppress the corrosion of a film defect area by virtue of their self-repairing effects.

The coating may further contain a soluble metal phosphate or complex phosphate, or poorly soluble metal phosphate or complex phosphate. The soluble metal phosphate or complex phosphate further improves the corrosion resistance of the shaped metal material by complementing the self-repairing effects of the metal fluoride(s) described above. The poorly soluble metal phosphate or complex phosphate disperses in the coating and improves film strength. The soluble metal phosphate or complex phosphate, or poorly soluble metal phosphate or complex phosphate is, for example, a salt of Al, Ti, Zr, Hf, Zn or the like.

The film thickness of the coating is not particularly limited as long as the film thickness is 0.2 µm or more. When the film thickness of the coating is less than 0.2 µm, the adhesion of the cloth to the shaped metal material may not be satisfactorily improved. On the other hand, the upper limit of the film thickness of the coating is not particularly limited, and preferably about 20 µm. When the film thickness exceeds 20 µm, the coating cannot be expected to improve the adhesion any more.

The coating may further contain, in addition to the above described resins, an etching agent, an inorganic compound, a lubricant, a color pigment, a dye and/or the like.

An etching agent improves the adhesion of the coating to the shaped metal material by activating the surface of the shaped metal material. Examples of the etching agents include hydrofluoric acid, ammonium fluoride, hydrogen fluorozirconate and hydrogen fluorotitanate.

An inorganic compound improves water resistance by densifying the coating. Examples of the inorganic compounds include sols of inorganic oxides such as silica, alumina, and zirconia, and phosphates such as sodium phosphate, calcium phosphate, manganese phosphate, and magnesium phosphate.

Examples of the lubricants include organic lubricants such as fluorine-based lubricants, polyethylene-based lubricants and styrene-based lubricants, and inorganic lubricants such as molybdenum disulfide and talc.

Further, a predetermined color tone may be imparted to the coating by adding, e.g., an inorganic pigment, an organic pigment or an organic dye.

### [Cloth]

The cloth contains a chemical fiber, and is joined to the surface of the coated shaped metal material.

Type of cloth contained therein is not particularly limited, and appropriately selected in accordance with a desired design. Examples of the cloth include woven fabrics, knitted fabrics, lace, felt, nonwoven fabrics and combinations thereof. Examples of the chemical fibers contained in the cloth include polyurethane fibers, polyvinyl alcohol fibers, polyvinyl chloride fibers and combinations thereof. The chemical fiber preferably has a polycarbonate unit (specifically, a benzene ring), and more preferably is, for example, a polyurethane fiber.

The cloth may further contain a natural fiber, such as cotton, hemp, silk or paper, or inorganic fiber, such as a ceramic fiber or a metal fiber.

### 2. Method for Manufacturing Composite

The method for manufacturing a composite will now be described. The method for manufacturing a composite according to the present embodiment includes: 1) a first step of providing a coated shaped metal material; 2) a second step of heating the coated shaped metal material; and 3) a third step of joining cloth containing a chemical fiber by compression to the coated side of the coated shaped metal material that is heated. Hereinafter, each step will be described.

### 1) First Step

In the first step, a coated shaped metal material is provided. For example, the coated shaped metal material is manufactured by the below procedure. The coated shaped metal material may be processed into a desired shape by pressing or the like.

A shaped metal material serving as a base material to be coated is provided. In a case where a chemical conversion film is formed, chemical conversion treatment is performed prior to formation of a coating. In a case where a chemical conversion film is not formed, the coating is directly formed.

In the case of forming a chemical conversion film on the surface of the shaped metal material, the chemical conversion film can be formed by applying a chemical conversion treatment solution to the surface of the shaped metal material followed by drying. A method for applying the chemical conversion treatment liquid is not particularly limited and can be appropriately selected from conventional methods. Examples of the methods for applying a chemical conversion treatment liquid include roll coating method, curtain flow method, spin coating method, spraying method, and dip-drawing method. The drying condition of the chemical conversion treatment liquid may be appropriately set in accordance with the composition of the chemical conversion treatment liquid, or the like. A uniform chemical conversion film can be formed on the surface of the shaped metal material by placing the shaped metal material having a chemical conversion treatment liquid applied thereon into a drying oven without washing with water, followed by heating the same at a peak plate temperature in a range of 80 to 250°C.

The coating can be formed by applying and baking a coating material which contains the above described polyurethane resin containing a polycarbonate unit on the surface of the shaped metal material (or the chemical conversion film). A method for applying the coating material is not particularly limited and can be appropriately selected from conventional methods. Examples of the methods for applying the coating material include roll coating method, curtain flow method, spin coating method, spraying method, and dip-drawing method. The baking condition of the coating material may be appropriately set in accordance with the composition of the coating material, or the like. A uniform coating can be formed on the surface of the shaped metal material (or the chemical conversion film) by placing the shaped metal material having the coating material applied thereon into a drying oven, followed by drying the same at a peak plate temperature in a range of 110 to 200°C with a hot-air dryer.

### 2) Second Step

In the second step, the coated shaped metal material provided in the first step is heated to a temperature suitable for thermocompression bonding with cloth. The heating temperature of the coated shaped metal material is not particularly limited as long as the cloth can be bonded by thermocompression to the surface of the coated shaped metal material. The temperature may be appropriately set in accordance with the composition of the coating, the type of chemical fiber contained in the cloth, and/or the like. A heating method is not particularly limited and can be appropriately selected from conventional methods. Examples of the heating methods include heater heating, electromagnetic induction heating, ultrasonic heating and infrared heating. For example, the coated shaped metal material is heated on a hot plate.

### 3) Third Step

In the third step, cloth containing a chemical fiber is joined by compression to the coated side of the coated shaped metal material heated in the second step. Specifically, the cloth containing the chemical fiber is brought in contact with the surface of the coated shaped metal material that is heated, and pressure is applied to allow the cloth to adhere to the surface. The strength and period of the pressure are not particularly limited as long as the cloth can be bonded by thermocompression to the surface of the coated shaped metal material. The strength and period may be appropriately set in accordance with the composition of the coating, the type of chemical fiber contained in the cloth, and/or the like. Examples of methods for applying pressure include applying pressure by human power, applying pressure mechanically using a vice, applying pressure using various rolls, and applying pressure by spraying air, nitrogen gas or the like. The cloth's own weight can be utilized if it is sufficient for adhesion of the cloth to the surface of the coated shaped metal material.

The cloth containing a chemical fiber can be joined with excellent adhesion to the surface of the coated shaped metal material by the above procedure. Accordingly, the composite according to the present embodiment can be manufactured.

As described above, the composite according to the present embodiment can be manufactured by bonding cloth containing a chemical fiber by thermocompression to the surface of the coated shaped metal material according to the present embodiment. The coated shaped metal material according to the present embodiment has a predetermined coating formed thereon, which has excellent adhesion to both the shaped metal material and the cloth. Therefore, the composite according to the present embodiment has excellent adhesion to both the shaped metal material and the cloth.

Hereinafter, the present invention will be described in detail with reference to examples; however, the present invention is not intended to be limited by these examples.

### Examples

In the present example, composites each including a coated shaped metal material and cloth containing a chemical fiber were prepared, and adhesion between the coated shaped metal material and the cloth was examined.

### 1. Preparation of Coated Shaped Metal Material

### (1) Shaped Metal Material

A stainless steel sheet and a molten Zn-Al-Mg alloy-coated steel sheet both in the shape of a plate were provided as base materials to be coated for coated shaped metal materials.

### I. Stainless Steel Sheet

SUS430 with 2D-finish having a sheet thickness of 0.8 mm was provided as a stainless steel sheet.

### II. Molten Zn-Al-Mg Alloy-coated Steel Sheet

A molten Zn-6mass% Al-3mass% Mg alloy-coated steel sheet having a coating coverage of 45 g/m² on one side was provided as a molten Zn-Al-Mg alloy-coated steel sheet. The steel substrate used was a cold-rolled steel sheet (SPCC) having a sheet thickness of 0.8 mm.

### (2) Preparation of Coating Material

A polycarbonate unit-containing resin, a polycarbonate unit-free resin, and various additives were added to water to prepare each coating material having 20% of nonvolatile component in such a manner that the mass ratio of the polycarbonate (PC) unit to the mass of the total resin became a predetermined ratio shown in Table 1 (see Table 1). When more than one polycarbonate unit-free resin is used, each polycarbonate unit-free resin was added in the same amount. To each coating material were added 0.5 mass% of ammonium fluoride (Morita Chemical Industries Co., Ltd.) as an etching agent, and 2 mass% of colloidal silica (Nissan Chemical Industries, Ltd.) and 0.5 mass% of phosphoric acid (Kishida Chemical Co., Ltd.) as inorganic compounds.

### A. Polycarbonate Unit-Containing Resin

Regarding polycarbonate unit-containing resins shown in Table 1, SF-420 (DKS Co. Ltd.) was used as a polyurethane resin containing 50 mass% of a polycarbonate unit. SF-470 (DKS Co. Ltd.) was used as a polyurethane resin containing 70 mass% of a polycarbonate unit. HUX-386 (ADEKA Corporation) was used as a polyurethane resin containing 80 mass% of a polycarbonate unit. A product under test provided by a resin manufacturer was used as a polyurethane resin containing 90 mass% of a polycarbonate unit.

A resin composition composed of 100 mass% of a polycarbonate unit was prepared by the following method. A polycarbonate sheet (TAKIRON Co., Ltd.) having a sheet thickness of 2.0 mm was cut into approximately 5-mm squares to obtain polycarbonate pieces. To 200 g of methylene chloride, 30 g of the polycarbonate pieces thus cut was added, and the mixture was stirred for 3 hours under heating to a solution temperature of 40°C to dissolve the polycarbonate pieces in methylene chloride. A resin composition composed of 100 mass% of a polycarbonate unit was prepared by the above steps.

### B. Polycarbonate Unit-Free Resin

Regarding polycarbonate unit-free resins shown in Table 1, HUX-232 (ADEKA Corporation) or SF-170 (DKS Co. Ltd.) was used as a polycarbonate unit-free polyurethane resin. ADEKA Resin EM-0461N (ADEKA Corporation) or SUPER ESTER E-650 (Arakawa Chemical Industries, Ltd.) was used as an epoxy resin. HARDLEN NZ-1005 (Toyobo Co., Ltd.) was used as a polyolefin resin.

### (3) Formation of Coating

Each base material to be coated was dipped for 1 minute to degrease the surface thereof in an aqueous alkali solution for degreasing (pH=12) having a solution temperature of 60°C. Subsequently, each coating material was applied to the degreased surface of the base material to be coated using a roll coater, and dried with a hot-air dryer at a peak plate temperature of 150°C to form a coating having the film thickness shown in Table 1.

**[Table 1]**

| Coated Shaped Metal Material No. | PC Unit (mass%) | PC Unit-containing Resin | PC Unit-free Resin | Film Thickness of Coating (µm) | Base Material to be Coated |
|---|---|---|---|---|---|
| 1 | 15 | B | a, b | 3.2 | II |
| 2 | 30 | C | b | 0.2 | II |
| 3 | 30 | C | b | 2.2 | II |
| 4 | 30 | D | a | 2.5 | I |
| 5 | 50 | D | a, d | 1.1 | II |
| 6 | 70 | C | a | 0.5 | II |
| 7 | 80 | C | - | 1.4 | I |
| 8 | 80 | D | b | 1.8 | II |
| 9 | 80 | D | d | 0.1 | II |
| 10 | 0 | - | a | 2.3 | I |
| 11 | 0 | - | b, c | 1.6 | II |
| 12 | 5 | A | a | 1.1 | II |
| 13 | 14 | B | a, e | 3.5 | II |
| 14 | 85 | D | b | 2.4 | I |
| 15 | 100 | E | - | 0.8 | II |

| | | | | | |
|---|---|---|---|---|---|
| - Samples 9-15 are reference coated base materials. PC Unit-containing Polyurethane Resin A: Polyurethane Resin Containing 50 mass% of PC Unit (SF-420) B: Polyurethane Resin Containing 70 mass% of PC Unit (SF-470) C: Polyurethane Resin Containing 80 mass% of PC Unit (HUX-386) D: Polyurethane Resin Containing 90 mass% of PC Unit E: Polyurethane Resin Containing 100 mass% of PC Unit - PC unit-free Resin a: PC unit-free polyurethane resin (HUX-232) b: PC unit-free polyurethane resin (SF-170) c: Epoxy Resin (ADEKA Resin EM-0461N) d: Epoxy Resin (SUPER ESTER E-650) e: Polyolefin Resin (HARDLEN NZ-1005) - Base Material to be Coated I: SUS430 II: Molten Zn-Al-Mg Alloy-coated Steel Sheet | | | | | |

### 2. Preparation of Composite

A warp knitted fabric composed of a polyurethane fiber and a nylon fiber (Hi-Tension; Asahi Kasei Corp.) was provided as cloth containing a chemical fiber. The cloth was cut into a piece having a size of 20 mm in width and 100 mm in length.

A coated shaped metal material cut to a size of 50 mm×50 mm was placed on a hot plate heated to 230°C. The piece of cloth was then placed on the surface of the coated shaped metal material that is heated so that the cloth was brought in contact, at an end region thereof having a size of 20 mm×20 mm, with the coated shaped metal material. Subsequently, pressure is applied at the region, where the coated shaped metal material and the cloth overlap, for 10 seconds by putting a 2kg-weight thereon. Finally, cooling to room temperature while the load was continued to be applied to the cloth was performed to obtain a composite of the coated shaped metal material and the cloth.

### 3. Evaluation of Adhesion

A 90° peeling test using a uniaxial tensile tester was performed, in which the cloth was peeled off at a speed of 300 mm/min and in a direction always at a right angle to the plate surface of the coated shaped metal material. The maximum strength (peel strength) at which the cloth was peeled off by the 90° peeling test was measured. In this instance, the broken portion was observed to see whether the peeling occurred between the shaped metal material and the coating, or between the coating and the cloth. The composite was evaluated as "Poor" when the peel strength was less than 5N, as "Fair" when the peel strength was 5N or more and less than 10N, as "Good" when the peel strength was 10N or more and less than 15N, and as "Excellent" when the peel strength was 15N or more, or only the cloth was broken. A composite having a peel strength of less than 10N (Fair) was found disqualified due to its inability to withstand practical use. Table 2 shows the measuring results of the peel strength for the evaluated composites.

**[Table 2]**

| Category | Coated Shaped Metal Material No. | PCUnit (mass%) | Film Thickness of Coating (µm) | Peel Strength (N) | Position of Peeling |
|---|---|---|---|---|---|
| Ex.1 | 1 | 15 | 3.2 | 11.2(Good) | Breakage of Cloth Interface between Coating and Cloth |
| Ex.2 | 2 | 30 | 0.2 | 10.4(Good) | Breakage of Cloth Interface between Coating and Cloth |
| Ex.3 | 3 | 30 | 2.2 | 14.1(Good) | Breakage of Cloth Interface between Coating and Cloth |
| Ex.4 | 4 | 30 | 2.5 | 12.5(Good) | Breakage of Cloth Interface between Coating and Cloth |
| Ex.5 | 5 | 50 | 1.1 | 162(Excellent) | Breakage of Cloth Interface between Coating and Cloth |
| Ex.6 | 6 | 70 | 0.5 | 11.7(Good) | Breakage of Cloth Interface between Coatinng and Cloth |
| Ex.7 | 7 | 80 | 1.4 | 18.6(Excellent) | Breakage of Cloth Interface between Coating and Cloth |
| Ex.8 | 8 | 80 | 1.8 | - (Excellent) | Breakage of Cloth |
| Ex.9 | 2 | 30 | 0.2 | 11.1(Good) | Breakage of Cloth Interface between Coating and Cloth |
| Ex.10 | 5 | 50 | 1.1 | 12.8(Good) | Breakage of Cloth Interface between Coating and Cloth |
| Ex.11 | 8 | 80 | 1.8 | - (Excellent) | Breakage of Cloth |
| Comp.Ex.1 | 9 | 80 | 0.1 | 5.5 (Fair) | Not Confirmable |
| Comp. Ex.2 | 10 | 0 | 2.3 | 0.0(Poor) | Interface between Coating and Cloth |
| Comp.Ex.3 | 11 | 0 | 1.6 | 0.0(Poor) | Interface between Coating and Cloth |
| Comp. Ex.4 | 12 | 5 | 1.1 | 3.0(Poor) | Interface between Coating and Cloth |
| Comp.Ex.5 | 13 | 14 | 3.5 | 6.9(Fair) | Interface between Coating and Cloth |
| Comp.Ex.6 | 14 | 85 | 2.4 | 6.1(Fair) | Interface between Shaped Metal Material and Coating |
| Comp.Ex.7 | 15 | 100 | 0.8 | 0.0(Poor) | Interface between Shaped Metal Material and Coating |

The composite of Comparative Example 1 had unsatisfactory adhesion between the coated shaped metal material and the cloth due to an unduly small film thickness of the coating. In addition, the position of peeling was not confirmable due to the unduly thin coating. The composite of each of Comparative Examples 2 to 5 had unsatisfactory adhesion between the coating and the cloth due to the too low mass ratio of the polycarbonate unit to the mass of the total resin in the coating. The composite of each of Comparative Examples 6 and 7 had unsatisfactory adhesion between the shaped metal material and the coating due to the too high mass ratio of the polycarbonate unit to the mass of the total resin in the coating.

Regarding the composite of each of Examples 1 to 11, the film thickness of the coating is 0.2 µm or more, and the mass ratio of the polycarbonate unit to the mass of the total resin in the coating is in a predetermined range (15 to 80 mass%), and thus adhesion between the coated shaped metal material and the cloth was excellent. The position of peeling was a breakage of the cloth, or a mixture of breakages of the cloth and at the interface between the coating and the cloth.

### Industrial Applicability

The composite of the present invention has excellent adhesion between a coated shaped metal material and cloth containing a chemical fiber, and therefore, is suitably used for, e.g., interior materials of automobiles, various interior panels in architecture, or wall materials.

## Claims

1. A composite comprising:
a coated shaped metal material which includes a shaped metal material and a coating formed on a surface of the shaped metal material; and
cloth which contains a chemical fiber and is joined to the coated side of the coated shaped metal material,
wherein, the coating contains a polyurethane resin containing a polycarbonate unit,
a mass ratio of the polycarbonate unit to mass of a total resin in the coating is 15 to 80 mass%,
a film thickness of the coating is 0.2 µm or more, and
the chemical fiber is a polyurethane fiber, a polyvinyl alcohol fiber, a polyvinyl chloride fiber or a combination thereof.

2. The composite according to claim 1, wherein the cloth is a woven fabric, a knitted fabric, lace, felt, a nonwoven fabric or a combination thereof.

3. A method for manufacturing a composite including a coated shaped metal material and cloth containing a chemical fiber, the coated shaped metal material including a shaped metal material and a coating formed on the coated side of the shaped metal material, the method comprising:
providing the coated shaped metal material;
heating the coated shaped metal material; and
joining the cloth containing a chemical fiber by compression to the coated side of the coated shaped metal material that is heated,
wherein, the coating contains a polyurethane resin containing a polycarbonate unit,
a mass ratio of the polycarbonate unit to mass of a total resin in the coating is 15 to 80 mass%,
a film thickness of the coating is 0.2 µm or more, and
the chemical fiber is a polyurethane fiber, a polyvinyl alcohol fiber, a polyvinyl chloride fiber or a combination thereof.

## Patentansprüche

1. Verbundstoff, aufweisend:
ein beschichtetes geformtes Metallmaterial, das ein geformtes Metallmaterial und eine auf einer Oberfläche des geformten Metallmaterials gebildete Beschichtung aufweist; und
Tuch, das eine Chemiefaser enthält und mit der beschichteten Seite des beschichteten geformten Metallmaterials verbunden ist,
wobei die Beschichtung ein Polyurethanharz enthält, das eine Polycarbonateinheit enthält,
ein Massenverhältnis der Polycarbonateinheit zu der Masse eines gesamten Harzes in der Beschichtung 15 bis 80 Massen-% beträgt,
eine Filmdicke der Beschichtung 0,2 µm oder mehr beträgt, und
es sich bei der Chemiefaser um eine Polyurethanfaser, eine Polyvinylalkoholfaser, eine Polyvinylchloridfaser oder eine Kombination davon handelt.

2. Verbundstoff nach Anspruch 1, wobei es sich bei dem Tuch um ein Gewebe, ein Gestrick, Spitze, Filz, ein Vlies oder eine Kombination davon handelt.

3. Verfahren zum Herstellen eines Verbundstoffs, der ein beschichtetes geformtes Metallmaterial und ein Chemiefaser enthaltendes Tuch beinhaltet, wobei das beschichtete geformte Metallmaterial ein geformtes Metallmaterial und eine auf der beschichteten Seite des geformten Metallmaterials gebildete Beschichtung aufweist, wobei das Verfahren umfasst:
Bereitstellen des beschichteten geformten Metallmaterials;
Erwärmen des beschichteten geformten Metallmaterials; und
Verbinden des eine Chemiefaser enthaltenden Tuchs mit der beschichteten Seite des beschichteten geformten Metallmaterials, das erwärmt ist, durch Pressen,
wobei die Beschichtung ein Polyurethanharz enthält, das eine Polycarbonateinheit enthält,
ein Massenverhältnis der Polycarbonateinheit zu der Masse eines gesamten Harzes in der Beschichtung 15 bis 80 Massen-% beträgt,
eine Filmdicke der Beschichtung 0,2 µm oder mehr beträgt, und
es sich bei der Chemiefaser um eine Polyurethanfaser, eine Polyvinylalkoholfaser, eine Polyvinylchloridfaser oder eine Kombination davon handelt.

## Revendications

1. Composite comprenant :
un matériau métallique mis en forme revêtu qui inclut un matériau métallique mis en forme et un revêtement formé sur une surface du matériau métallique mis en forme ; et
un tissu qui contient une fibre chimique et est assemblé au côté revêtu du matériau métallique mis en forme revêtu,
dans lequel, le revêtement contient une résine de polyuréthane contenant une unité de polycarbonate,
un rapport massique entre l'unité de polycarbonate et une masse d'une résine totale dans le revêtement est de 15 à 80 % en masse,
une épaisseur de film du revêtement est de 0,2 µm ou plus, et
la fibre chimique est une fibre de polyuréthane, une fibre d'alcool polyvinylique, une fibre de polychlorure de vinyle ou une combinaison de celles-ci.

2. Composite selon la revendication 1, dans lequel le tissu est un tissu tissé, un tissu tricoté, de la dentelle, du feutre, un tissu non tissé ou une combinaison de ceux-ci.

3. Procédé de fabrication d'un composite incluant un matériau métallique mis en forme revêtu et un tissu contenant une fibre chimique, le matériau métallique mis en forme revêtu incluant un matériau métallique mis en forme et un revêtement formé sur le côté revêtu du matériau métallique mis en forme, le procédé comprenant :
la fourniture du matériau métallique mis en forme revêtu ;
le chauffage du matériau métallique mis en forme revêtu ; et
l'assemblage du tissu contenant une fibre chimique par compression sur le côté revêtu du matériau métallique mis en forme revêtu qui est chauffé,
dans lequel, le revêtement contient une résine de polyuréthane contenant une unité de polycarbonate,
un rapport massique entre l'unité de polycarbonate et une masse d'une résine totale dans le revêtement est de 15 à 80 % en masse,
une épaisseur de film du revêtement est de 0,2 µm ou plus, et
la fibre chimique est une fibre de polyuréthane, une fibre d'alcool polyvinylique, une fibre de polychlorure de vinyle ou une combinaison de celles-ci.
